# EUROPÄISCHE PATENTSCHRIFT

(11) **EP 2 686 703 B1**
(45) Veröffentlichungstag und Bekanntmachung des Hinweises auf die Patenterteilung: **11.07.2018**
(21) Anmeldenummer: 12702513.8
(22) Anmeldetag: 02.02.2012
(51) Int. Cl.: G01S 17/42, G01S 17/89, G01S 7/486

(54) **MESSVORRICHTUNG UND MESSGERÄT ZUR MEHRDIMENSIONALEN VERMESSUNG EINES ZIELOBJEKTES**
MEASURING APPARATUS AND MEASURING DEVICE FOR MEASURING A TARGET OBJECT IN A MULTIDIMENSIONAL MANNER
DISPOSITIF DE MESURE ET APPAREIL DE MESURE POUR LA MESURE MULTIDIMENSIONNELLE D'UN OBJET CIBLE

(30) Priorität: 18.03.2011 DE 102011005746
(43) Veröffentlichungstag der Anmeldung: 22.01.2014
(73) Patentinhaber: Robert Bosch GmbH, 70442 Stuttgart (DE)
(72) Erfinder: EISELE, Andreas, 70771 Leinfelden-Echterdingen (DE); SCHMIDTKE, Bernd, 71229 Leonberg (DE); KALLMANN, Ulrich, 72076 Tuebingen (DE)
(86) Internationale Anmeldenummer: PCT/EP2012/051719
(87) Internationale Veröffentlichungsnummer: WO 2012/126659

(56) Entgegenhaltungen:
- WO-A1-2011/029645
- WO-A1-2012/123809
- US-A- 5 892 575
- US-A1- 2004 021 852

## Beschreibung

### GEBIET DER ERFINDUNG

Die Erfindung betrifft eine Messvorrichtung zur Messung einer Entfernung zwischen der Messvorrichtung und einem Zielobjekt mit Hilfe von optischer Messstrahlung. Insbesondere betrifft die Erfindung eine Messvorrichtung zur mehrdimensionalen Vermessung eines Zielobjektes

### HINTERGRUND DER ERFINDUNG

Handelsübliche Laserentfernungsmesser basieren in der Regel auf einem kontinuierlich phasenmessenden und gleichzeitig in einen kleineren Frequenzbereich mischendem Heterodynverfahren. Sowohl die Intensität der Lichtquelle (Laser) als auch die Empfindlichkeit des Detektors werden hochfrequent mit einer kleinen Frequenzverschiebung gegeneinander moduliert. Dadurch entsteht eine niederfrequente Schwebung, deren Phasenlage proportional zum Abstand des Messobjektes ist.

Ein wesentlicher Vorteil ist bei diesen Verfahren die geringe zeitauflösende Anforderung an die Elektronik im niederfrequenten Signalverarbeitungs-Bereich. Andererseits ist eine zeitlich kontinuierliche Messung erforderlich, die in der Regel länger als die Pulsumlaufzeit zwischen Sender und Empfänger dauert. Daher ist eine gute optische Isolation zwischen Sende- und Empfangspfad notwendig.

Ein derartiger Laserentfernungsmesser ist beispielsweise aus der DE 10235562 A1 bekannt.

3D-Laser-Scanner kombinieren die Funktion der Entfernungsmessung mit einem mechanischen Scanner, der die Möglichkeit bietet Entfernungsmessungen sequentiell unter definierten Abstrahlwinkeln zu realisieren. Das Verfahren zur Entfernungsbestimmung ist in der Regel ein Puls-Umlaufzeit messendes Verfahren. Ein Kurzpuls-Laser erzeugt einen Lichtpuls, der über den Sendepfad auf den durch den Scanner anvisierten Messpunkt gerichtet wird. Der vom Messpunkt zurück gestreute Puls wird über den Empfangspfad auf einen schnellen Detektor abgebildet. Die Lichtlaufzeit zwischen Puls-Generierung und Empfang und somit der Abstand wird für den anvisierten Messpunkt bestimmt.

Diese 3D-Laser-Scanner zeichnen sich insbesondere dadurch aus, dass die optische Achse des Empfangspfades innerhalb der Scanner-Baugruppe mit der des Sendepfades übereinstimmt (es gibt keine Parallaxe). Die mechanische Ablenkeinheit (Scanner) wird nur einmal benötigt und muss somit auch nur einmal ausgerichtet werden. Es bestehen nur geringe Anforderungen an die optische Isolation zwischen Sende- und Empfangspfad. Da es sich um Puls-Umlaufzeit messende Verfahren handelt, besteht andererseits die hohe Anforderung an das zeitliche Auflösungsvermögen der Signalverarbeitungselektronik.

Derartige Laserscanner sind beispielsweise in der US-5988862 oder der EP 01209441 B1 beschrieben.

Aus der US 5,892,575 sind ein Verfahren und eine Vorrichtung zur Abbildung eines Objektes mit einem Detektor, der im nichtlinearen Geiger Mode betrieben wird bekannt. Das System der US 5,892,575 arbeitet nach dem Pulslaufzeitverfahren und bildet das zu vermessende Objekt mittels eines scannenden Spielgels im Empfangspfad der Vorrichtung ab.

Die US 2004/021852 offenbart einen stationären Neueintrittsfahrzeuginterzeptor mit IR-System und variablem "Field-of View Laserradar. Das System der US 2004/021852, bei dem es sich um ein militärisches Raketen Leit- oder Trackingsystem handelt, verwendet ein Impulslaufzeitverfahren und schlägt die Verwendung von Detektoren im Geiger-Mode vor.

### OFFENBARUNG UND MÖGLICHE AUSFÜHRUNGSFORMEN DER ERFINDUNG

Scannende Elemente gibt es für die oben beschriebenen Entfernungsmesser bislang nicht. Die oben genannte Schwierigkeit der optischen Isolation beider Pfade führt zu der Notwendigkeit, Sende- und Empfangspfad auch innerhalb der mechanischen ScannerEinheit zu trennen.

Separate Scanner-Einheiten für Sende- und Empfangspfad müssen wiederum auch zueinander für alle Scanner-Positionen sehr gut ausgerichtet sein, so dass die optischen Achsen beider Pfade genügend gut parallel zueinander stehen. Der Parameter der diese Anforderung skaliert ist die Größe des Detektors.

Die Detektor-Größe bestimmt gleichzeitig auch das Gesichtsfeld des Empfangspfades, welches für ein gutes Signal-Rausch-Verhältnis wiederum möglichst klein zu halten ist. Ein in diesem Sinne idealer Detektor ist demnach ein großflächiges Sensor-Array auf dem jeweils nur derjenige Bereich aktiviert wird, der für die Signalauswertung relevant ist.

Ein Kern der Erfindung ist die Kombination eines großflächigen zeitauflösenden optischen Sensors mit getrennten optischen Systemen für Sende- und Empfangspfad für eine winkelauflösende, im Wesentlichen nach dem Stand der Technik ausgebildete Laserentfernungsmessung.

Realisiert ist dies durch eine Vorrichtung zur mehrdimensionalen Vermessung eines Objektes, wobei die Entfernung eines einzelnen Objektpunktes durch Lichtlaufzeitmessung erfolgt und der Lichtstrahl die gesamte zu vermessende Oberfläche des Objektes sequentiell entlang einer Linie oder zweidimensional abrastert. Gekennzeichnet durch die Verwendung, eines großflächigen zeitauflösenden optischen Sensors bei gleichzeitig getrennten optischen Systemen für Sende- und Empfangspfad.

Der optische Sensor weist dabei insbesondere eine Detektionsfläche mit eine Vielzahl von Pixeln auf, wobei jedes Pixel mindestens eine SPAD (Single Photon Avalanche Photodiode) aufweist und wobei jedes der Vielzahl von Pixeln mit einer Auswerteeinrichtung verbunden ist;

Vorteile einer derartigen Ausgestaltung sind u.a.:
- geringere Anforderung an das Zeitauflösungsvermögen der elektronischen Signalverarbeitung durch mischendes und phasen-messendes Verfahren im Vergleich zu Puls-Laufzeitmessung vergleichbarer Genauigkeit.
- eine (besonders für phasen-messende Verfahren notwendige) sehr gute optische Trennung zwischen Sende- und Empfangspfad.
- geringere Justage-Anforderungen an Sende- und Empfangspfad aufgrund des großflächigen Detektors.
- die Möglichkeit das Signal-Rausch-Verhältnis und damit die Reichweite zu verbessern, dadurch dass ein Detektor-Array mit auswählbaren Pixeln verwendet wird.
- Kostenersparnis dadurch, dass ein SPAD-Detektor-Array verwendet wird.

Des Weiteren weist die erfindungsgemäße Vorrichtung zumindest einen der nachfolgenden Vorteile auf:
- Aufweitung einer Justagetoleranz einer Empfangsoptik der Entfernungsmessvorrichtung bezogen auf einen Detektor;
- Reduzierung einer Komplexität und von Anforderungen an eine Empfangsoptik;
- Erhöhung eines Dynamikbereiches insbesondere bei der Messung kleiner Entfernungen;
- Optimierung eines Signal-Rausch-Verhältnisses insbesondere bei der Messung großer Entfernungen; und/oder
- Verringerung einer für die Auswertung benötigten Chipfläche einer integrierten Schaltung.

Die erfindungsgemäße Messvorrichtung zur optischen Entfernungsmessung weist eine Sendeeinrichtung zur Aussendung optischer Messstrahlung auf ein Zielobjekt hin, eine Empfangseinrichtung mit einer Detektionsfläche zur Detektion von von dem Zielobjekt zurücklaufender optischer Messstrahlung und eine Auswerteeinrichtung auf. Die Detektionsfläche der Empfangseinrichtung weist dabei eine Vielzahl von Pixeln auf, wobei jedes Pixel mindestens eine SPAD (Single Photon Avalanche Diode; Einzelphotonenlawinendiode) aufweist. Jedes der Vielzahl von Pixeln ist mit der Auswerteeinrichtung direkt oder indirekt über weitere zwischengeschaltete Bauelemente verbunden. Die getrennten Sende- und Empfangseinrichtung sind dabei derart ausgelegt, dass von dem Zielobjekt zurücklaufende optische Messstrahlung bei einer vorsehungsgemäßen Verwendung der Entfernungsmesseinrichtung jeweils eine Mehrzahl von Pixeln gleichzeitig beleuchtet. Die Auswerteeinrichtung ist dabei dazu ausgelegt, eine Entfernung zwischen der Messvorrichtung und dem Zielobjekt basierend auf einer Auswertung von Detektionssignalen mehrerer Pixel, insbesondere mehrerer der gleichzeitig beleuchteten Pixel, zu ermitteln.

Die erfindungsgemäße Messvorrichtung entspricht somit einem Laser-Entfernungsmesser mit einem zusätzlichen Scanner-System. Das Scanner-System besteht beispielsweise aus je einem Galvano-Scanner für den Sende- und den Empfangspfad. Die optischen Pfade sind aufgrund der Verwendung zweier getrennter Spiegel hinsichtlich Übersprechens sehr gut gegeneinander isoliert.

Als Detektor wird dabei ein großes Detektor-Array verwendet, in dem einzelne Pixel-Gruppen zusammengefasst bzw. aktiviert werden können. Auf diese Weise kann die Toleranz-Anforderung an die Parallelität der beiden Spiegel deutlich verringert werden. Jedes Pixel besteht dabei aus zumindest einem lichtempfindlichen Element.

Es sind Array-Größen von mehreren Millimetern realisierbar. Die einzelnen Detektor-Pixel sind beispielsweise als Single-Photon Avalanche Dioden (SPADs) ausgeführt. Es sind jedoch auch modulierte CCDs oder CMOS Pixel denkbar.

In einer vorteilhaften Ausführung der Erfindung ist die erfindungsgemäße Messvorrichtung in einem Gehäuse integriert. Damit lässt sich ein entsprechendes Messgerät realisieren. Dieses Messgerät, welches insbesondere als ein handgehaltenes Messgerät ausgebildet sein kann, ermöglicht eine Entfernungsmessung in unterschiedlichen Richtungen, insbesondere ohne, dass das Gerät selbst bewegt, beispielsweise rotiert werden muss. Die Messvorrichtung ermöglicht somit eine Ablenkung des Messstrahls relativ zum Gehäuse des Messgerätes.

Eine SPAD kann die Eigenschaft aufweisen, dass sie nicht wie herkömmliche analog arbeitende lichtempfindliche Elemente ein von der auftreffenden Strahlung linear abhängiges Detektionssignal liefert, sondern mit jedem auftreffenden Photon ein einzelnes Signal erzeugt wird. Die SPAD ist nach dem Auftreffen eines Photons für eine gewisse Totzeit, die im Bereich von beispielsweise 1 bis 100 ns liegen kann, nicht erneut aktivierbar. Man spricht auch von einem paralysierbaren Ansprechverhalten. Die Zählrate, mit der eine SPAD auftreffende Photonen zählen kann, ist somit nach oben hin durch die Totzeit begrenzt. Es kann daher vorteilhaft sein, anstatt einer einzigen großflächigen SPAD mehrere kleinere SPADs innerhalb eines Pixels vorzusehen und beispielsweise Detektionssignale von in einem einzelnen Pixel enthaltenen SPADs mit Hilfe eines Kombinierers zu kombinieren. Der Kombinierer kann hierbei beispielsweise in Form eines ODER-Gatters oder in Form eines Busses ausgestaltet sein. Auf diese Weise kann die von dem Pixel maximal erreichbare Photonenzählrate erhöht werden bzw., anders ausgedrückt, die Totzeit des Pixels zwischen einzelnen Detektionsereignissen verkürzt werden. Ferner kann zwischen einer SPAD und einem Kombinierer oder Bus ein Pulsverkürzer angeordnet sein, um ein von der SPAD generiertes digitales Signal zeitlich zu verkürzen und dadurch eine verkürzte Gesamttotzeit und eine erhöhte Photonenzählrate des Systems zu ermöglichen.

Die Anzahl von SPADs oder die Fläche von SPADs, die in einem Pixel enthalten sind, kann abhängig vom Ort des Pixels innerhalb der Detektionsfläche der Empfangseinrichtung variabel ausgewählt sein. Beispielsweise kann bekannt sein, dass die von dem Zielobjekt zurücklaufende Messstrahlung abhängig vom Abstand des Zielobjekts von der Messvorrichtung an einer anderen Position und/oder mit einer anderen Querschnittsfläche auf die Detektionsfläche der Empfangseinrichtung auftreffen kann. Die Anzahl bzw. die Fläche von SPADs innerhalb eines Pixels kann demnach ortsabhängig an die zu erwartende auftreffende Lichtintensität angepasst werden. Durch Anpassung der Flächen der SPADs und/oder Anzahl von SPADs innerhalb eines Pixels kann ein Dynamikbereich der Messvorrichtung optimiert werden. Durch Anpassung der Pixel-Flächen an eine Laserfleckgröße kann ein Signal-Rausch-Verhältnis optimiert werden.

Die Sendeeinrichtung kann eine Lichtquelle, beispielsweise in Form einer LED, eines Lasers oder einer Laserdiode sein, die Licht zeitlich moduliert hin zu dem Zielobjekt aussendet. Die zeitliche Modulation kann hierbei kontinuierlich und/oder periodisch, beispielsweise sinusartig, erfolgen. Es können auch Pulszüge, beispielsweise nichtperiodisch wie z.B. in Form von sogenannten Pseudo-Noise-Pulsabfolgen ausgesendet werden.

Die Empfangseinrichtung kann sich von Empfangseinrichtungen, wie sie in herkömmlichen Entfernungsmessgeräten verwendet werden, dahingehend unterscheiden, dass anstatt analog arbeitender lichtempfindlicher Elemente, die gegebenenfalls zusammengeschaltet werden können, um ein analoges Gesamtsignal bereitzustellen, eine Vielzahl von Pixeln innerhalb einer Detektionsfläche vorgesehen sein kann, wobei jedes Pixel eine oder mehrere SPADs beinhaltet. Wie weiter unten noch detaillierter erläutert, ist eine SPAD dabei ein lichtempfindliches Element, das abhängig von einer auftreffenden Lichtintensität ein digitales Detektionssignal liefert. Jedes der Pixel kann dabei direkt oder beispielsweise unter Zwischenschaltung eines Multiplexers, der dazu ausgelegt ist, Detektionssignale mehrerer Pixel selektiv weiterzuleiten, mit der Auswerteeinrichtung verbunden sein. Auf diese Weise kann zum Beispiel erreicht werden, dass Detektionssignale einzelner Pixel oder einer Gruppe von Pixeln unabhängig von Detektionssignalen anderer Pixel von der Auswerteeinrichtung ausgewertet werden können.

Die Sendeeinrichtung und die Empfangseinrichtung sind derart ausgelegt und aufeinander abgestimmt, dass von dem Zielobjekt zurücklaufende optische Messstrahlung unter normalen Messbedingungen, das heißt beispielsweise bei Messabständen von wenigen Zentimetern bis zu einigen 100 Metern, eine Mehrzahl von Pixeln gleichzeitig beleuchtet werden. Die Tatsache, dass eine Mehrzahl von Pixeln gleichzeitig beleuchtet wird, soll hierbei jedoch nicht wie bei herkömmlichen 3D-Kameras dazu benutzt werden, ein Abbild des Zielobjektes bzw. eine räumliche Auflösung hinsichtlich der Entfernung zu einzelnen Teilbereichen auf einer Oberfläche des Zielobjektes zu detektieren, sondern soll, wie weiter unten noch detaillierter erläutert, unter anderem Vorteile hinsichtlich einer Detektionsempfindlichkeit und/oder einer Justagetoleranz ermöglichen. Die Entfernung zwischen der Messvorrichtung und dem Zielobjekt wird dabei basierend auf einer Auswertung von Detektionssignalen mehrerer Pixel, insbesondere mehrerer der gleichzeitig beleuchteten Pixel, ermittelt.

Die Sendeeinrichtung kann hierzu einen Messstrahl aussenden, dessen Querschnitt ausreichend groß ist, dass der von dem Zielobjekt zurücklaufende Anteil des Messstrahls stets eine Mehrzahl von Pixeln beleuchtet. Um die von dem Zielobjekt zurücklaufende Messstrahlung zu bündeln und auf die Detektionsfläche zu leiten, um auf diese Weise für ein ausreichend starkes Detektionssignal zu sorgen, kann innerhalb eines optischen Weges von der Sendeeinrichtung zu der Empfangseinrichtung eine einfache Optik, beispielsweise in Form einer oder mehrerer Linsen, vorgesehen sein. Diese einfache Optik kann kostensparend und aufwandsreduzierend als nicht-automatisch-fokussierende Optik ("Fix-Fokus") ausgestaltet sein. Da eine solche nicht-automatisch-fokussierende Optik mit fester Brennweite einen von dem Zielobjekt zurücklaufenden Messstrahl nur dann optimal, d.h. mit kleinstem Spot-Durchmesser, auf die Detektionsfläche der Empfangseinrichtung fokussieren kann, wenn sich das Zielobjekt in dem der Brennweite und Bildebene entsprechenden Objektabstand zu der Messvorrichtung befindet, kann die Anzahl von Pixeln, die durch von dem Zielobjekt zurücklaufende Messstrahlung gleichzeitig beleuchtet werden, in Abhängigkeit von einem Abstand zwischen dem Zielobjekt und dem Messobjekt variieren. Beispielsweise kann die Optimierung des optischen Empfangssystems für den Empfang von Messstrahlung von weit entfernten Zielobjekten mit großem Objektabstand bedeuten, dass Brennweite und Bildabstand so zu wählen sind, dass für den großen Objektabstand die geometrische Abbildungsbedingung erreicht wird. Somit kann bei großer Entfernung der kleinste Spot-Durchmesser in der Bildebene erreicht werden ("die Abbildung ist scharf"). Durch die Festlegung der Brennweite und Bildebene kann die Anzahl von Pixeln, die im Falle eines näher liegenden Zielobjektes beleuchtet werden, wesentlich größer sein als bei einem weit entfernten Zielobjekt. Bei einem näher liegenden Zielobjekt kann die zurücklaufende Messstrahlung nicht mehr scharf abgebildet werden, so dass der beleuchtete Bereich der Detektionsfläche entsprechend größer werden kann.

Da die Detektionssignale einzelner Pixel unabhängig voneinander ausgewertet können, können die Empfangseinrichtung und die Auswerteeinrichtung dazu ausgelegt werden, eine Entfernung zwischen der Messvorrichtung und dem Zielobjekt basierend auf einer Auswertung von Detektionssignalen ausschließlich von Pixeln, auf die Licht der von der Sendeeinrichtung beleuchteten Fläche des Zielobjektes rückgestrahlt wird, zu ermitteln. Mit anderen Worten kann die Auswerteeinrichtung beispielsweise zunächst in einer Vorabmessung ermitteln, welche der Pixel der Detektionsfläche tatsächlich Messstrahlung der Sendeeinrichtung empfangen und welche Pixel lediglich Hintergrundstrahlung detektieren, und kann anschließend für die tatsächliche Entfernungsbestimmung lediglich die Detektionssignale der von der Messstrahlung beleuchteten Pixel verwenden. Hierdurch kann ein Signal-Rausch-Verhältnis erheblich erhöht werden.

Um die Entfernung zwischen der Messvorrichtung und dem Zielobjekt ermitteln zu können, kann die Auswerteeinrichtung wenigstens eine Entfernungsbestimmungseinrichtung (teilweise auch als "Binning-Schema" bekannt) aufweisen. Die Entfernungsbestimmungseinrichtung kann dazu ausgelegt sein, eine Flugdauer von Messstrahlung zwischen einer Aussendung von der Sendeeinrichtung bis zu einer Detektion der von dem Zielobjekt zurücklaufenden Messstrahlung auf der Detektionsfläche zu ermitteln und daraus eine Entfernung zu bestimmen. Die Entfernungsbestimmungseinrichtung kann hierzu eine von der Sendeeinrichtung bereitgestellte Information über die zeitliche Modulation ausgesendeter Messstrahlung mit von der Empfangseinrichtung bereitgestellten Detektionssignalen vergleichen. Im Fall einer periodisch modulierten ausgesendeten Messstrahlung kann beispielsweise aus einem Phasenunterschied zwischen einem Aussendungssignal und einem Detektionssignal eine entsprechende Entfernung ermittelt werden.

Prinzipiell kann eine einzige Entfernungsbestimmungseinrichtung für die Ermittlung einer Entfernung zwischen der Messvorrichtung und dem Zielobjekt genügen. Um die Anzahl von Entfernungsbestimmungseinrichtungen gering zu halten, kann es vorteilhaft sein, die Detektionssignale einzelner Pixel oder einer Gruppe von Pixeln zum Beispiel mit Hilfe eines Multiplexers nacheinander an eine Entfernungsbestimmungseinrichtung zu leiten. Aufgrund einer derart sequentiellen Verarbeitung von Detektionssignalen kann es zu einer Verlängerung einer Gesamtmessdauer kommen. Alternativ kann jedem der Pixel eine eigene Entfernungsbestimmungseinrichtung zugeordnet sein. In diesem Fall kann aus jedem der Detektionssignale der Vielzahl von Pixeln jeweils eine Entfernung bestimmt werden, möglicherweise zeitlich parallel zueinander, und aus der Vielzahl von bestimmten Entfernungen kann schließlich beispielsweise durch Mittelung eine letztendlich zu bestimmende Entfernung zwischen der Vorrichtung und dem Zielobjekt ermittelt werden. Allerdings kann es hierzu notwendig sein, eine sehr große Anzahl von Entfernungsbestimmungseinrichtungen in der Messvorrichtung vorzusehen, was den Aufbau und die Fertigung der Messvorrichtung kompliziert gestalten kann.

Sozusagen als Mittelweg zwischen diesen beiden extremen Alternativen kann eine Mehrzahl von Pixeln mit einer Entfernungsbestimmungseinrichtung verbunden sein und die Entfernungsbestimmungseinrichtung kann dazu ausgelegt sein, die Entfernung basierend auf Detektionssignalen der Mehrzahl von Pixeln zu bestimmen. Die Auswerteeinrichtung kann eine Mehrzahl von Entfernungsbestimmungseinrichtungen aufweisen und dazu ausgelegt sein, die Entfernung zwischen der Messvorrichtung und dem Zielobjekt basierend auf den von den Entfernungsbestimmungseinrichtungen bestimmten Entfernungen zu bestimmen, beispielsweise durch Mittelwertbildung.

Eine SPAD kann die Eigenschaft aufweisen, dass sie nicht wie herkömmliche analog arbeitende lichtempfindliche Elemente ein von der auftreffenden Strahlung linear abhängiges Detektionssignal liefert, sondern mit jedem auftreffenden Photon ein einzelnes Signal erzeugt wird. Die SPAD ist nach dem Auftreffen eines Photons für eine gewisse Totzeit, die im Bereich von beispielsweise 1 bis 100 ns liegen kann, nicht erneut aktivierbar. Man spricht auch von einem paralysierbaren Ansprechverhalten. Die Zählrate, mit der eine SPAD auftreffende Photonen zählen kann, ist somit nach oben hin durch die Totzeit begrenzt. Es kann daher vorteilhaft sein, anstatt einer einzigen großflächigen SPAD mehrere kleinere SPADs innerhalb eines Pixels vorzusehen und beispielsweise Detektionssignale von in einem einzelnen Pixel enthaltenen SPADs mit Hilfe eines Kombinierers zu kombinieren. Der Kombinierer kann hierbei beispielsweise in Form eines ODER-Gatters oder in Form eines Busses ausgestaltet sein. Auf diese Weise kann die von dem Pixel maximal erreichbare Photonenzählrate erhöht werden bzw., anders ausgedrückt, die Totzeit des Pixels zwischen einzelnen Detektionsereignissen verkürzt werden. Ferner kann zwischen einer SPAD und einem Kombinierer oder Bus ein Pulsverkürzer angeordnet sein, um ein von der SPAD generiertes digitales Signal zeitlich zu verkürzen und dadurch eine verkürzte Gesamttotzeit und eine erhöhte Photonenzählrate des Systems zu ermöglichen.

Die Anzahl von SPADs oder die Fläche von SPADs, die in einem Pixel enthalten sind, kann abhängig vom Ort des Pixels innerhalb der Detektionsfläche der Empfangseinrichtung variabel ausgewählt sein. Beispielsweise kann bekannt sein, dass die von dem Zielobjekt zurücklaufende Messstrahlung abhängig vom Abstand des Zielobjekts von der Messvorrichtung an einer anderen Position und/oder mit einer anderen Querschnittsfläche auf die Detektionsfläche der Empfangseinrichtung auftreffen kann. Die Anzahl bzw. die Fläche von SPADs innerhalb eines Pixels kann demnach ortsabhängig an die zu erwartende auftreffende Lichtintensität angepasst werden. Durch Anpassung der Flächen der SPADs und/oder Anzahl von SPADs innerhalb eines Pixels kann ein Dynamikbereich der Messvorrichtung optimiert werden. Durch Anpassung der Pixel-Flächen an eine Laserfleckgröße kann ein Signal-Rausch-Verhältnis optimiert werden.

Wenn beispielsweise im Lichtweg zwischen der Sendeeinrichtung und der Empfangseinrichtung eine nicht-automatisch-fokussierende Optik, die für weitentfernte Zielobjekte abbildend bzw. optimal fokussierend ausgelegt ist, angeordnet ist, kann für weit entfernte Zielobjekte die zurücklaufende Messstrahlung mit einem kleinen Fleck- bzw. Spot-Durchmesser fokussiert werden. Innerhalb eines solchen Bereiches der Detektionsfläche kann es vorteilhaft sein, dass jedes der Pixel lediglich eine einzige SPAD oder nur wenige SPADs enthält. Wenn mit einer solchen Fix-Fokus-Messvorrichtung näher liegende Zielobjekte anvisiert werden, kann die zurücklaufende Messstrahlung auf der Detektionsfläche nicht als kleiner Fleck fokussiert werden, sondern trifft eventuell defokussiert auf eine größere Teilfläche der Detektionsfläche. Insgesamt werden in diesem Fall dann mehr Pixel beleuchtet als im Fall eines weit entfernt liegende Zielobjektes. Daher kann es vorteilhaft sein, in Randbereichen des beleuchteten Teilbereiches der Detektionsfläche jeweils eine Mehrzahl von SPADs zu einem einzelnen Pixel (oder "sub-array" oder "cluster" von SPADs) zusammenzufassen.

Beispielsweise können die Sendeeinrichtung und die Empfangseinrichtung nebeneinander entlang einer Parallaxenachse angeordnet sein. Solche sogenannte biaxiale Messsysteme können den Vorteil haben, dass keine aufwändige Strahlungsteilung zur Selektion des rücklaufenden Messstrahls notwendig ist. Der von der Sendeeinrichtung ausgestrahlte und von dem Zielobjekt zurücklaufende Messstrahl kann in diesem Fall je nach Entfernung des Zielobjektes an einer anderen Stelle entlang der Parallaxenachse auf die Detektionsfläche treffen und unterschiedliche Querschnitte aufweisen. In diesem Fall kann es vorteilhaft sein, die Anzahl von SPADs, die in einem Pixel enthalten sind, abhängig vom Ort des Pixels entlang der Parallaxenachse zu variieren. Insbesondere kann es vorteilhaft sein, die Anzahl von SPADs, die in einem Pixel enthalten sind, in Pixeln nahe der Sendeeinrichtung kleiner zu wählen als in Pixeln entfernt von der Sendeeinrichtung.

Alternativ können die Sendeeinrichtung und die Empfangseinrichtung koaxial zueinander angeordnet sein. Bei einer solchen monoaxialen Messvorrichtung kann beispielsweise mit Hilfe semitransparenter Spiegel erreicht werden, dass das Zentrum des von der rücklaufenden Strahlung beleuchteten Bereichs der Detektionsfläche unabhängig von der Entfernung des Zielobjekts weitgehend orts-konstant bleibt. Allerdings kann der Querschnitt des beleuchteten Bereichs auf der Detektionsfläche weiterhin von der Entfernung des Zielobjektes abhängen. Bei weit entfernten Zielobjekten und einer Optik mit weiter Brennweite kann es zu einem kleinen beleuchteten Fleck kommen, bei näher liegenden Zielobjekten zu einem größeren beleuchteten Fleck. Es kann vorteilhaft sein, die Anzahl von SPADs, die in einem Pixel enthalten sind, in Pixeln nahe dem Zentrum der Detektionsfläche kleiner zu wählen als in Pixeln entfernt von dem Zentrum der Detektionsfläche.

Mögliche Aspekte, Vorteile und Ausgestaltungen der Erfindung wurden vorangehend mit Bezug auf einzelne Ausführungsformen der Erfindung beschrieben. Die Beschreibung, die zugehörigen Figuren sowie die Ansprüche enthalten zahlreiche Merkmale in Kombination. Ein Fachmann wird diese Merkmale, insbesondere auch die Merkmale verschiedener Ausführungsbeispiele, auch einzeln betrachten und zu sinnvollen weiteren Kombinationen zusammenfassen.

### KURZE BESCHREIBUNG DER FIGUREN

Nachfolgend werden Ausführungsformen der Erfindung und darin enthaltene Teilaspekte mit Bezug auf die beigefügten Figuren beschrieben. Die Figuren sind lediglich schematisch und nicht maßstabsgetreu. Gleiche oder ähnliche Bezugszeichen in den Figuren bezeichnen gleiche oder ähnliche Elemente.
Fig. 1 zeigt eine Messvorrichtung zur optischen Entfernungsmessung gemäß einer Ausführungsform der vorliegenden Erfindung in einer schematischen Darstellung.
Fig. 2 zeigt eine schematisierte Schaltung von zwei SPADs, die mit einem Kombinierer verbunden sind, für eine Messvorrichtung gemäß einer Ausführungsform der vorliegenden Erfindung.
Fig. 3 zeigt eine Draufsicht auf eine Detektionsfläche einer Empfangseinrichtung für eine Messvorrichtung gemäß einer Ausführungsform der vorliegenden Erfindung.
Fig. 4 zeigt eine Draufsicht auf eine alternative Detektionsfläche einer Empfangseinrichtung für eine Messvorrichtung gemäß einer Ausführungsform der vorliegenden Erfindung.
Fig. 5 zeigt eine einzelne SPAD, die mit einer Entfernungsbestimmungseinrichtung verbunden ist.
Fig. 6 zeigt zwei SPADs, die über einen Multiplexer mit einer Entfernungsbestimmungseinrichtung verbunden sind.
Fig. 7 zeigt zwei Pixel mit jeweils 9 SPADs, die über Kombinierer und Multiplexer mit einer Entfernungsbestimmungseinrichtung verbunden sind.
Fig. 8 zeigt eine Detektionsfläche einer Empfangseinrichtung mit Pixeln, bei denen die Anzahl von in den Pixeln enthaltenen SPADs ortsabhängig variiert und welche über Kombinierer und Multiplexer mit mehreren Entfernungsbestimmungseinrichtungen verbunden sind.
Figur 9 zeigt in schematischer Darstellung ein erfindungsgemäßes Messgerät in zwei unterschiedlichen Ansichten.

### DETAILIERTE BESCHREIBUNG VON AUSFÜHRUNGSFORMEN

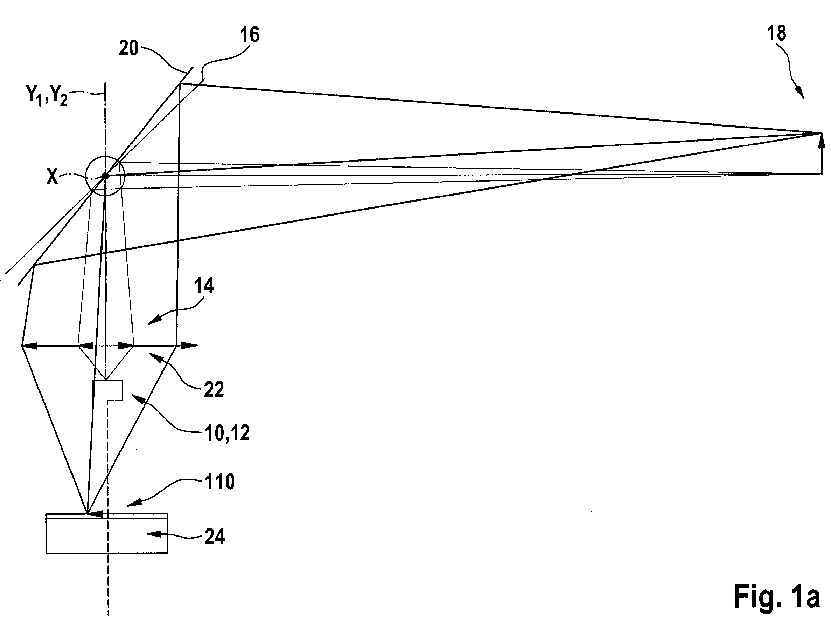

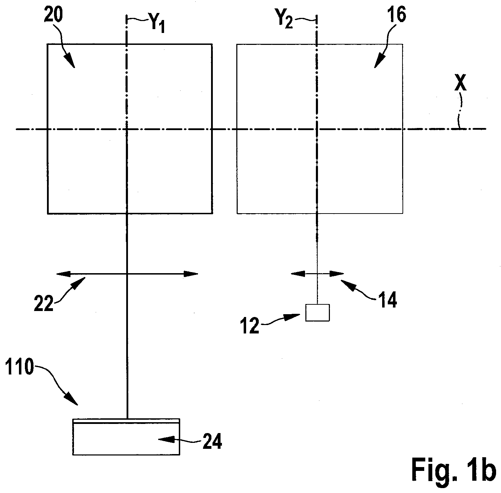

Die Abbildungen der Figur 1 zeigen das erfindungsgemäße Messsystem in der Ausführungsform eines Laser-Entfernungsmessers mit einem zusätzlichen Scanner-System in einer stark schematisierten Darstellung zur Verdeutlichung des Messprinzips. Die Funktionsweise von elektro-optischen Entfernungsmessern, insbesondere solchen als phasen-messende Systeme ausgelegten Entfernungsmessern, wird als bekannt vorausgesetzt. Das Scanner-System besteht aus je einem Galvano-Scanner für den Sende- und den Empfangspfad. Die optischen Pfade sind aufgrund der Verwendung zweier getrennter Spiegel hinsichtlich Übersprechens sehr gut gegeneinander isoliert.

Figur 1a zeigt dabei das erfindungsgemäße Messsystem in einer stark schematisierten Aufsicht. Das Messsignal wird über eine modulierte Lichtquelle 10, die durch eine Laserdiode 12 realisiert ist und einen Kollimator 14 auf einen in zumindest zwei Achsen beweglichen Spiegel 16 geleitet. Mittels des gesteuerten Spiegels wird das Mess- bzw. Zielobjekt 18 angescannt, d.h. die gesamte zu vermessende Oberfläche des Messobjektes 18, welches in der Regel ein zwei oder drei dimensionaler Gegenstand ist, wird sequentiell entlang einer Linie oder zweidimensional abgerastert.

Das vom Messobjekt rücklaufende Messsignal gelangt über einen Spiegel 20 des Empfangssystems und eine Empfangslinse 22 auf die Detektoroberfläche 110 eines Detektors 24, der das optische Signal in noch zu beschreibender Weise in elektrische Signale umsetzt, aus denen dann die jeweilige Entfernung zu den vermessenden Objektpunkten des Zielobjektes bestimmt werden.

Beide Spiegel 16 bzw. 20 werden synchron um die X-Achse gedreht, so dass der Laserstrahl eine Linie auf der Objektoberfläche des Zielobjektes abfahren kann.

Zusätzlich können die Spiegel 16 bzw. 20 optional auch um die Y-Achse synchron rotiert werden, so dass eine flächige Abtastung möglich wird. Die sich aufgrund der Parallaxe ergebende winkelabhängige Abstandsvariation kann durch System-Kalibrierung korrigiert werden.

Abbildung 1b der Figur 1 zeigt den schematischen Aufbau in einer zweiten Perspektive zur Verdeutlichung der Anordnung von Sende- und Empfangspfad.

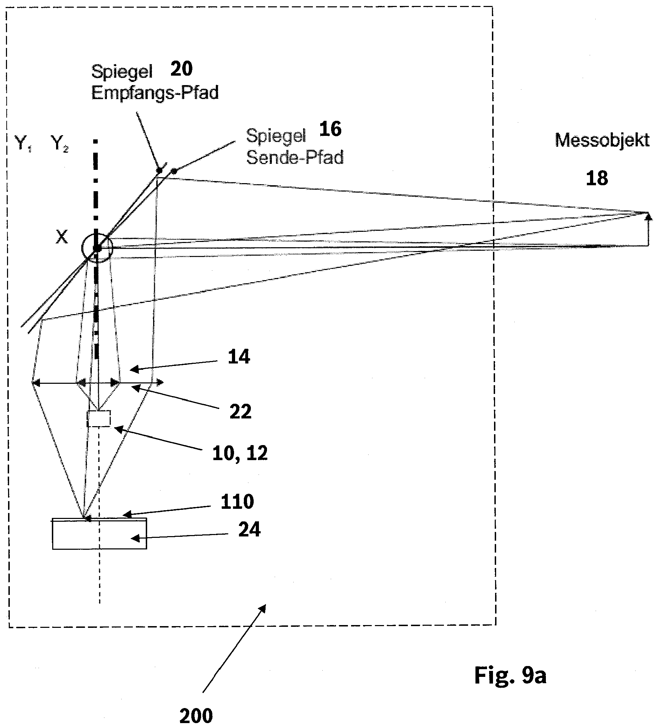

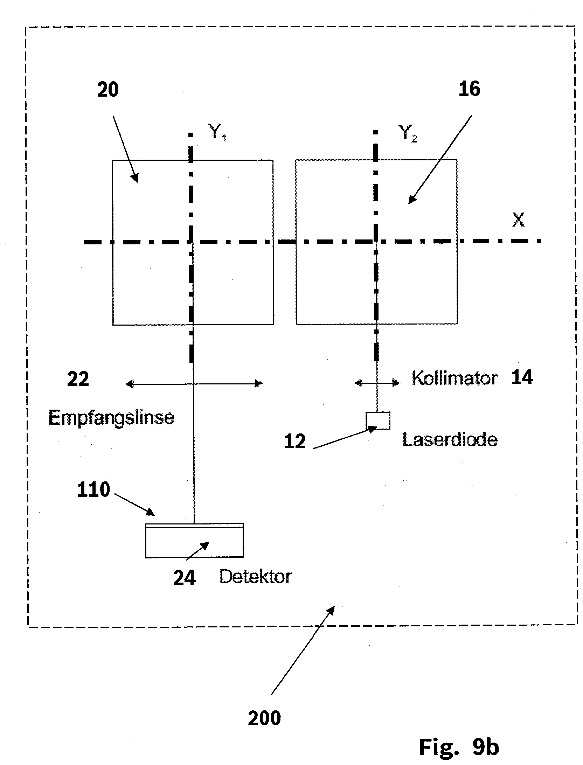

Die erfindungsgemäße Messvorrichtung ist in vorteilhafter Weise in eine Gehäuse 200 integriert und bildet ein Messgerät. Dies ist schematisch in den Figuren 9 in entsprechenden Ansichten verdeutlicht. Ein solches Messgerät, welches insbesondere als handgehaltenes Messgerät ausgebildet ist, kann eine Ausgabeeinheit in Form eines Displays aufweisen. Darüber hinaus besitzt das erfindungsgemäße Messgerät eine geräteinterne Energieversorgung in Form von auswechselbaren Batterien oder wiederaufladbaren Akkuzellen. Auch eine fest im Gehäuse integrierte entsprechende Energiequelle, die über eine Schnittstelle am Gehäuse ausgeladen werden kann, ist möglich.

Weiter illustrieren die Abbildungen der Fig. 1 eine leichte Fehljustage zwischen Sende- und Empfangs-Spiegel. (Siehe hierzu insbesondere Figur 1a) Diese führt im Bild auf der Detektorebene 110 zu einer Abweichung des abgebildeten Laser-Spots von der optischen Achse des Empfangspfades. Die Größe des Detektors 22 bestimmt das Gesichtsfeld des optischen Empfangspfades. Ist die Spiegel-Dejustage größer als das Gesichtsfeld, dann wird der Laser-Spot nicht mehr auf dem Detektor abgebildet und eine Messung ist nicht mehr möglich. Beispiel: Mit einer Brennweite von 30mm und einer Detektorgröße 30µm folgt als Parallelitäts-Anforderung an die beiden Spiegel die Winkelgenauigkeit von 1mrad.

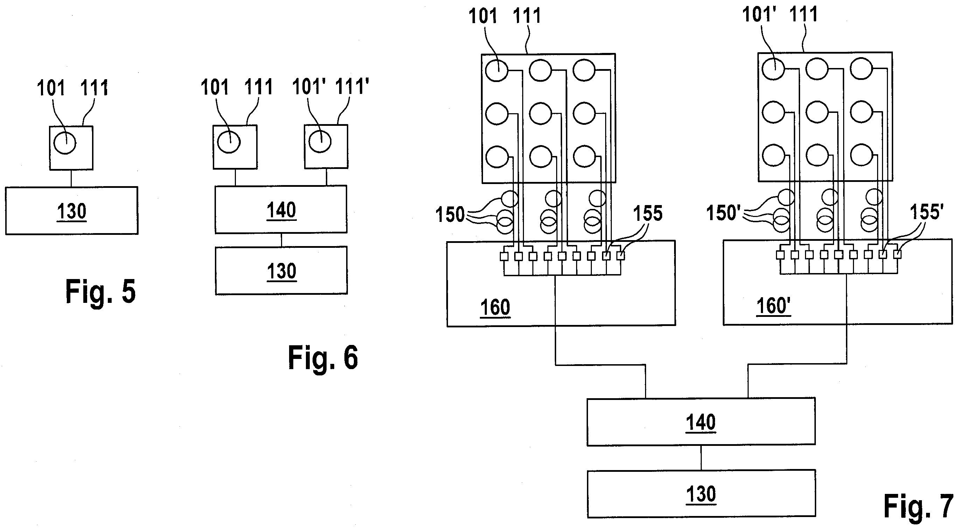

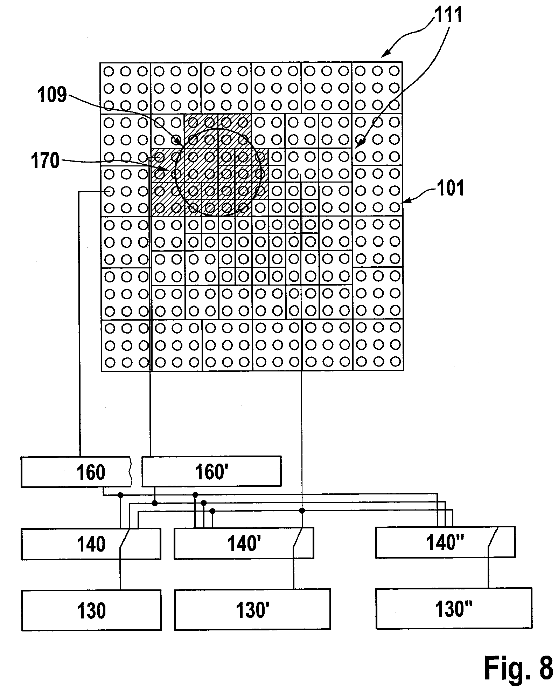

Als Detektor 20 wird daher ein großes Detektor-Array verwendet, in dem einzelne Pixel-Gruppen zusammengefasst bzw. aktiviert werden können. (Siehe hierzu insbesondere nachfolgende Figuren 7 oder 8) Auf diese Weise kann die Toleranz-Anforderung an die Parallelität der beiden Spiegel deutlich verringert werden.

Es sind Array-Größen von mehreren Millimetern realisierbar. Die einzelnen Detektor-Pixel 101 sind beispielsweise als Single-Photon Avalanche Dioden (SPADs) ausgeführt. Es sind jedoch auch modulierte CCDs oder CMOS Pixel denkbar.

Eine SPAD kann die Eigenschaft aufweisen, dass sie nicht wie herkömmliche analog arbeitende lichtempfindliche Elemente ein von der auftreffenden Strahlung linear abhängiges Detektionssignal liefert, sondern mit jedem auftreffenden Photon ein einzelnes Signal erzeugt wird. Die SPAD ist nach dem Auftreffen eines Photons für eine gewisse Totzeit, die im Bereich von beispielsweise 1 bis 100 ns liegen kann, nicht erneut aktivierbar. Man spricht auch von einem paralysierbaren Ansprechverhalten. Die Zählrate, mit der eine SPAD auftreffende Photonen zählen kann, ist somit nach oben hin durch die Totzeit begrenzt. Es kann daher vorteilhaft sein, anstatt einer einzigen großflächigen SPAD mehrere kleinere SPADs innerhalb eines Pixels vorzusehen und beispielsweise Detektionssignale von in einem einzelnen Pixel enthaltenen SPADs mit Hilfe eines Kombinierers zu kombinieren. Der Kombinierer kann hierbei beispielsweise in Form eines ODER-Gatters oder in Form eines Busses ausgestaltet sein. Auf diese Weise kann die von dem Pixel maximal erreichbare Photonenzählrate erhöht werden bzw., anders ausgedrückt, die Totzeit des Pixels zwischen einzelnen Detektionsereignissen verkürzt werden. Ferner kann zwischen einer SPAD und einem Kombinierer oder Bus ein Pulsverkürzer angeordnet sein, um ein von der SPAD generiertes digitales Signal zeitlich zu verkürzen und dadurch eine verkürzte Gesamttotzeit und eine erhöhte Photonenzählrate des Systems zu ermöglichen.

Die Anzahl von SPADs oder die Fläche von SPADs, die in einem Pixel enthalten sind, kann abhängig vom Ort des Pixels innerhalb der Detektionsfläche der Empfangseinrichtung variabel ausgewählt sein. Beispielsweise kann bekannt sein, dass die von dem Zielobjekt zurücklaufende Messstrahlung abhängig vom Abstand des Zielobjekts von der Messvorrichtung an einer anderen Position und/oder mit einer anderen Querschnittsfläche auf die Detektionsfläche der Empfangseinrichtung auftreffen kann. Die Anzahl bzw. die Fläche von SPADs innerhalb eines Pixels kann demnach ortsabhängig an die zu erwartende auftreffende Lichtintensität angepasst werden. Durch Anpassung der Flächen der SPADs und/oder Anzahl von SPADs innerhalb eines Pixels kann ein Dynamikbereich der Messvorrichtung optimiert werden. Durch Anpassung der Pixel-Flächen an eine Laserfleckgröße kann ein Signal-Rausch-Verhältnis optimiert werden.

Statt eines Galvano-Scanners können auch diffraktiv arbeitende Strahlablenkungseinheiten zur Anwendung kommen.

Weiterhin besteht die Möglichkeit, im Empfangspfad auf ein scannendes System zu verzichten, da das gegenüber dem Stand der Technik große Sensorelement bei Einsatz geeigneter passiver optischer Komponenten (Linsen) ein ausreichend großes optisches Gesichtsfeld erzeugt.

Der Sensor erlaubt zusätzlich, nur bestimmte Teilbereiche des Sensors für die Messung zu nutzen. Damit kann das im Falle eines nicht scannenden Empfangssystems zu erwartende Störlichtsignal signifikant reduziert werden, indem nur die relevanten Sensorbereiche ausgelesen werden. Die Auswahl relevanter Sensorbereiche kann dadurch erfolgen, dass die bekannte Strahlausgangsrichtung die Richtungskomponenten der rückgestreuten Strahlung weitgehend festlegt.

Anschließend soll noch auf die Besonderheiten des großflächige Detektors und seiner Vorteile für ein scannendes System näher eingegangen werden.

Die von einer einzelnen SPAD oder einer Kombination von SPADs generierten Detektionssignale können einer oder mehreren in einer Auswerteeinrichtung 36 enthaltenen Entfernungsbestimmungseinrichtung(en) zugeführt werden. Die Entfernungsbestimmungseinrichtung kann die Detektionssignale aufsummieren und daraus ein Signal erzeugen, das einer zeitabhängigen Intensität des auf die jeweiligen SPADs auftreffenden Lichtsignals bzw. der Lichtintensität entspricht. Indem dieses Signal in Relation zu einem Anregungssignal gesetzt wird, das den zeitlichen Verlauf der von der Sendeeinrichtung emittierten Photonenrate angibt, kann auf eine Photonenflugzeit von der Sendeeinrichtung hin zu dem Zielobjekt und wieder zurück zu der Empfangseinrichtung geschlossen werden. Falls die Sendeeinrichtung das ausgesendete Licht beispielsweise sinusartig periodisch moduliert, kann eine Flugzeit aus einem Phasenunterschied zwischen der ausgesendeten und der detektierten Messstrahlung ermittelt werden.

In der Optoelektronik wird der Begriff "single photon avalanche diode" (SPAD), welcher manchmal auch als Einzelphotonenlawinendiode, Geiger-Modus-Lawinenfotodiode oder G-APD bezeichnet wird, für eine Klasse von Festkörperfotodetektoren verwendet, die auf einem in Rückwärtsrichtung vorgespannten pn-Übergang beruhen, in dem möglicherweise ein einzelner, durch ein Photon generierter Ladungsträger aufgrund eines Stoßionisationsmechanismus einen lawinenartigen Strom auslösen kann. Ein grundsätzlicher Unterschied zwischen einer SPAD und einer herkömmlichen Lawinenfotodiode (APD) kann darin liegen, dass die SPAD speziell dafür ausgelegt sein kann, bei einer Vorspannung in Umkehrrichtung zu arbeiten, die oberhalb der Durchbruchspannung (breakdown voltage) der Diode liegt. Dieser Betriebsmodus wird auch als Geiger-Modus bezeichnet, in Analogie zu einem Geiger-Zähler. Bei derart hohen Vorspannungen kann das elektrische Feld innerhalb des pn-Übergangs derart stark sein, dass ein einzelner in die Verarmungszone injizierter Ladungsträger einen sich selbst erhaltenden lawinenartigen Strom auslösen kann. Der Strom kann innerhalb eines Zeitraums von weniger als 1 ns auf ein makroskopisches Niveau beispielsweise im Bereich von mA ansteigen. Der Strom kann aufrechterhalten bleiben, bis die Lawine durch Absenken der Vorspannung auf ein Niveau unterhalb der Durchbruchspannung gedämpft ("quenched") wird und auf diese Weise der Lawinenstrom abgebrochen wird. Eine einfache Dämpfungsschaltung kann hierbei aus einem einfachen Widerstand bestehen, der zu der SPAD in Serie geschaltet ist. Der Lawinenstrom dämpft sich dabei einfach selbst aufgrund des entstehenden Spannungsabfalls über den hochohmigen Serienwiderstand. Nachdem der Lawinenstrom abgedämpft wurde, erholt sich die Vorspannung der SPAD und die SPAD ist wieder in der Lage, erneut ausgelöst zu werden. Während der Lawinenstrom fließt und während des Abdämpfens und der anschließenden Erholung der Vorspannung kann die SPAD jedoch während einer Totzeit τ nicht in der Lage sein, weitere Photonen zu detektieren.

Mit der Größe einer einzelnen SPAD ergibt sich dadurch eine obere Grenze für die maximal detektierbare Intensität (Leistung pro Fläche) bzw. den maximal detektierbaren Photonenstrom bzw. Photonenrate. Die pro Detektor absorbierte Photonenrate kann gesenkt werden, indem die Lichtleistung über mehrere SPADs verteilt wird. Damit kann die Detektionseffizienz bei hohen Lichtleistungen, wie sie insbesondere bei kurzen Messentfernungen auftreten kann, verbessert werden. Unter der Lichtleistung kann hierbei die gesamte von der Empfangslinse erfasste Lichtleistung der vom Zielobjekt zurücklaufenden Messstrahlung verstanden werden.

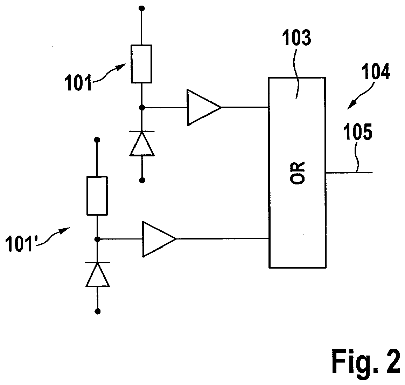

Fig. 2 zeigt zwei SPADs 101, 101', deren Detektionssignale jeweils an ein ODER-Gatter 103 weitergeleitet werden. Das ODER-Gatter 103 wirkt als Kombinierer 104, indem es sowohl Detektionssignale von der ersten SPAD 101 als auch Detektionssignale von der zweiten SPAD 101' aufnimmt und an einem Ausgang 105 ein kombiniertes Signal dieser Eingangssignale ausgibt.

Komplizierter kann die Situation bei Verwendung eines Kombinierers sein, der die Detektionssignale mehrerer einzelner SPADs auf einem Bus kombiniert. Die Totzeit, die dem Bus zuzuordnen ist, kann zu zusätzlichen Effizienzeinbußen verglichen mit einer vollständig parallelen Auswertung einer Gesamtheit von SPADs führen.

Indem die von den einzelnen SPADs generierten digitalen Signale mittels eines Pulsverkürzers zeitlich verkürzt werden, kann eine effektive Totzeit eines Gesamtsystems, dass aus mehreren mit einem Bus verbundenen SPADs besteht, verkürzt werden. Die effektive Totzeit des Gesamtsystems ergibt sich dabei aus einer Kombination der Totzeit der einzelnen SPADs und der Dauer der von den Verkürzern verkürzten Signale.

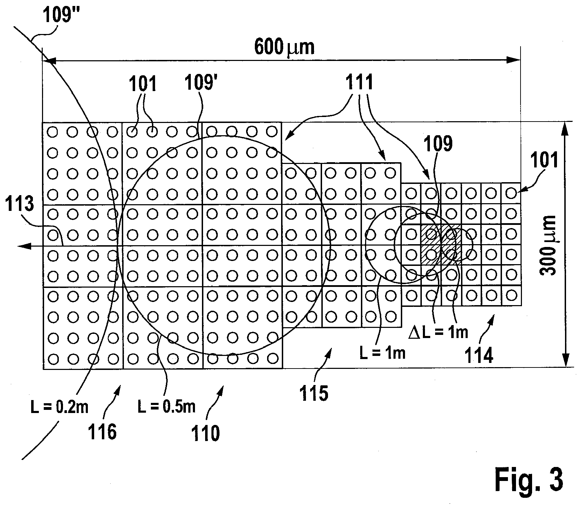

Fig. 3 zeigt schematisch eine Detektionsfläche 110 einer erfindungsgemäßen Laser-Entfernungsmessvorrichtung. Hierbei sind kreisförmige Laserflecke 109 oder Laser-spots, deren Durchmesser abhängig von einer Entfernungen L zwischen der Messvorrichtung und dem Zielobjekt variiert, auf der Detektionsfläche 110 eingezeichnet. Es wurde hierbei eine ideale Linse mit einer Brennweite f = 30 mm, einem Durchmesser d = 4 mm und einer Parallaxe von 5 mm für den Fall optimaler Justage auf große Entfernungen angenommen. Die Laserstrahlung wurde dabei mit einer Divergenz von 1 mrad angenommen. Es ist bei dieser Ausgestaltung der Detektionsfläche 110 vorteilhaft, dass die Größe der Pixel 111 bzw. die Anzahl von SPADs 101 innerhalb jeweiliger Pixel 111 entlang der Parallaxenachse 113 zunimmt. Die Parallaxenachse wird hierbei als die Schnittgerade zwischen einer Detektionsflächenebene und einer Ebene, die von der optischen Achse der Empfangsoptik und der Laserstrahlachse der Entfernungsmessvorrichtung aufgespannt wird, angenommen. Es ist zu erkennen, dass in einem ersten Bereich 114, in dem der Laserfleck 109 auftrifft, wenn der Laserstrahl von einem weit entfernten Zielobjekt zurückgestrahlt wird, kleine Pixel vorgesehen sind, die jeweils nur eine einzige SPAD enthalten. In einem Bereich 115, in dem der L aserfleck 109' auftrifft, wenn das Zielobjekt etwa 0,5 bis 1 m entfernt ist, sind größere Pixel mit jeweils vier SPADs vorgesehen. In einem weiteren Bereich 116, in dem der Laserfleck 109" für den Fall sehr naher Zielobjekte auftrifft, sind besonders große Pixel mit 8 bzw. 16 SPADs vorgesehen. Die Empfangsoptik ist dabei so optimiert, dass die bestmögliche Abbildungsqualität, das heißt der kleinstmögliche Laserfleckdurchmesser auf der Detektionsfläche, bei der größten Entfernung des Zielobjekts erreicht wird.

Bei großen Entfernungen ist der Laserfleck 109 aufgrund der scharfen Abbildung verhältnismäßig klein. Gleichzeitig ist die aus zurücklaufender Mess- und Hintergrundstrahlung zusammengesetzte Intensität des auftreffenden Lichtes aufgrund des geringen Anteils der Messstrahlung von dem weit entfernten Zielobjekt verhältnismäßig gering. Bei näher positionierten Zielobjekten wird insgesamt mehr Messstrahlung vom Zielobjekt zurück zur Detektionsfläche 110 reflektiert bzw. gestreut. Gleichzeitig wird die Messstrahlung durch die Fix-Fokus-Empfangsoptik nicht mehr scharf auf die Detektionsfläche 110 abgebildet.

In Summe ergibt sich aus einer geometrischen Betrachtung für einen Laser- Entfernungsmesser mit leicht divergentem Laser-Strahl und Fix-Fokus-Empfangsoptik für den Anteil der empfangenen Laserstrahlung bei großen Entfernungen eine quadratisch über der Entfernung abfallende und bei geringen Entfernungen eine über der Entfernung konstante Licht-Intensität in der Detektorebene. Der Intensitätsanteil der Hintergrundstrahlung ist hingegen in erster Näherung entfernungsunabhängig. Mit einer wie in Fig. 3 dargestellten ortsabhängigen Ausgestaltung der Größe der in der Detektionsfläche 110 enthaltenen Pixel 101 kann zum einen erreicht werden, dass sowohl bei großen Entfernungen des Zielobjektes als auch bei kleinen Entfernungen des Zielobjektes ein Laserfleck 109 jeweils auf eine Mehrzahl von Pixeln 111 trifft und von diesen ausgewertet werden kann. Die Größe der aktiven Detektionsfläche kann dabei optimal an die Größe des Laserflecks angepasst und somit das Signal-Rausch-Verhältnis optimiert werden. Zum anderen kann mit einer solchen ortsabhängigen Ausgestaltung auch der Dynamik-Bereich der SPADs optimal ausgenutzt werden, da die Lichtintensität des auftreffenden Lichtes (Laser- und Hintergrund-Anteil) bei großen Entfernungen geringer ist als bei kleinen Entfernungen. Bei den Detektorflächen, die nur bei geringen Entfernungen mit empfangener Messstrahlung beaufschlagt werden, kann daher die Fläche der einzelnen SPADs reduziert werden. In den Detektorbereichen, in denen die Intensität der empfangenen Messstrahlung nahezu konstant bleibt, kann die Anzahl von in den einzelnen Pixeln 111 enthaltenen SPADs 101 bei gleichbleibender SPAD-Fläche vergrößert werden.

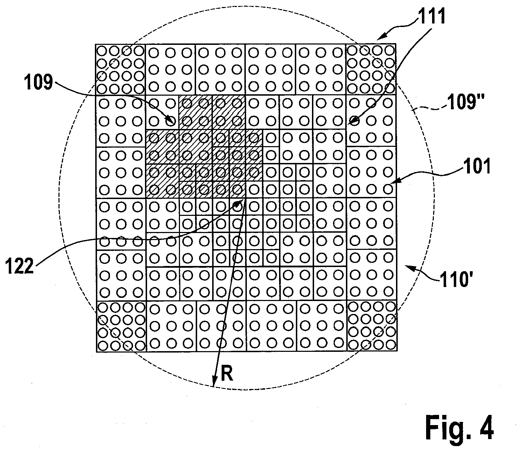

Fig. 4 zeigt eine Ausführungsform einer Detektionsfläche 110' für einen koaxialen Laserentfernungsmesser. Ein von einem weit entfernten Zielobjekt zurücklaufender Laserstrahl wird gut fokussiert und erzeugt einen relativ kleinen Laserfleck 109 in der Nähe des Zentrums 122 der Detektionsfläche 110', das heißt in der Nähe des Durchstoßpunktes der optischen Achse der Empfangsoptik durch die Detektionsflächenebene. Ein von einem näher liegenden Zielobjekt zurücklaufender Laserstrahl erzeugt einen Laserfleck 109" mit wesentlich größerem Durchmesser. Die Pixel 111 weisen in der Nähe des Zentrums 122 eine geringere Fläche und eine geringere Anzahl von darin enthaltenen SPADs 101 auf als entfernt vom Zentrum 122 der Detektionsfläche 110', das heißt am Rand der Detektionsfläche.

In den Fig. 5 bis 7 sind einzelne Elemente, wie sie zur Realisierung einer Empfangseinrichtung gemäß Ausführungsformen der vorliegenden Erfindung eingesetzt werden, als Blockschema dargestellt.

Fig. 5 zeigt ein Pixel 111 mit einer einzelnen SPAD 101. Das Pixel ist mit einer Entfernungsbestimmungseinrichtung 130 verbunden.

Fig. 6 zeigt zwei Pixel 111, 111' mit jeweils einer SPAD 101, 101'. Die Pixel 111, 111' sind mit einem Multiplexer 140 verbunden, der die von den Pixeln 111, 111' gelieferten Detektionssignale selektiv an eine Entfernungsbestimmungseinrichtung 130 weiterleitet.

In Fig. 7 ist eine Anordnung von zwei Pixeln 111, 111' mit jeweils neun SPADs 101, 101' dargestellt. Die Detektionssignale von den einzelnen SPADs 101, 101' werden, gegebenenfalls nach einer durch zusätzliche Verzögerungselemente 150, 150' bewirkten zeitlichen Verzögerung, jeweils an einen Kombinierer 160, 160' weitergeleitet. Die Verzögerung kann der Kompensation von Laufzeitunterschieden und damit der zeitlichen Synchronisation der SPADs eines Pixels oder verschiedener Pixel dienen. In den Kombinierern 160, 160' werden die Detektionssignale miteinander kombiniert. Zusätzlich können die von den SPADs generierten Signale mit Hilfe von Pulsverkürzern 155, 155' zeitlich verkürzt werden. Die kombinierten Detektionssignale werden von den Kombinierern 160, 160' an einen Multiplexer 140 und von dort aus weiter an eine Entfernungsbestimmungseinrichtung 130 geleitet.

Fig. 8 zeigt eine spezielle Ausführungsform für eine Entfernungsmessvorrichtung unter Verwendung solcher Elemente für N = 92 Pixel 111. Hierbei weisen 48 Pixel lediglich eine einzelne SPAD auf, 24 Pixel weisen jeweils vier SPADs in einer 2x2-Anordnung auf und 20 Pixel weisen jeweils 9 SPADs in einer 3x3-Anordnung auf. Jedes Pixel 111 mit mehr als einer SPAD 101 ist genau mit einem Kombinierer 160, 160' verbunden. Es gibt demnach 44 Kombinierer 160. Die Ausgänge der Pixel 111 mit nur einer SPAD bzw. der Kombinierer 160 sind mit Eingängen von K Multiplexern 140 verbunden. Die Ausgänge der Multiplexer 140 sind wiederum mit M Entfernungsbestimmungseinrichtungen 130 verbunden. Es gilt dabei weder notwendigerweise M = K noch M = N. Exemplarisch sind die Verbindungen für drei Pixel 111 verschiedener Größe und SPAD-Anzahl dargestellt. Eine in Fig. 11 schraffiert dargestellte Fläche gibt eine effektive Detektorfläche 170 an, die diejenigen Pixel 111 umfasst, die tatsächlich vom Laserlicht des Laserflecks 109 beleuchtet werden und anhand derer eine Entfernungsmessung zu dem Zielobjekt durchgeführt werden kann.

Figur 9 zeigt in stark schematisierter Weise in zwei zu Figur 1 korrespondierenden Ansichten ein erfindungsgemäßes Messgerät, welches zumindest eine Messvorrichtung in seinem Gehäuse 200 aufweist. Ein solches Messgerät, welches insbesondere als handgehaltenes Messgerät ausgebildet ist, kann eine Ausgabeeinheit in Form eines Displays aufweisen. Darüber hinaus besitzt das erfindungsgemäße Messgerät eine geräteinterne Energieversorgung in Form von auswechselbaren Batterien oder wiederaufladbaren Akkuzellen. Auch eine fest im Gehäuse integrierte entsprechende Energiequelle, die über eine Schnittstelle am Gehäuse ausgeladen werden kann, ist möglich.

Darüber hinaus kann der Strahlengang, beispielsweise der Sende- und Empfangspfad im Gehäuse 200 auch nochmals optisch gefaltet sein, um eine Messung "über Eck" zu vermeiden. Dies hat insbesondere in der Ausführung als handgehaltenes Messgerät für den Anwender Vorteil in der Bedienung.

Abschließend sollen Aspekte und Vorteile von Ausführungsformen der Erfindung noch einmal mit anderen Worten zusammengefasst werden:
Ein Kern der Erfindung ist die Kombination eines großflächigen zeitauflösenden optischen Sensors mit getrennten optischen Systemen für Sende- und Empfangspfad für eine winkelauflösende, im Wesentlichen nach dem Stand der Technik ausgebildete Laserentfernungsmessung.

Der optische Sensor weist dabei insbesondere eine Detektionsfläche mit eine Vielzahl von Pixeln auf, wobei jedes Pixel mindestens eine SPAD (Single Photon Avalanche Photodiode) aufweist und wobei jedes der Vielzahl von Pixeln mit einer Auswerteeinrichtung verbunden ist.

Eine derartige Messvorrichtung lässt sich in vorteilhafter Weise in einem kompakten, insbesondere handhaltbaren Gehäuse integrieren, so dass ein entsprechend kompaktes Messgerät ermöglicht wird.

Das erfindungsgemäße Messsystem besitzt geringere Anforderung an das Zeitauflösungsvermögen der elektronischen Signalverarbeitung durch Verwendung eines mischenden und phasen-messenden Verfahrens im Vergleich zu Puls-Laufzeitmessung vergleichbarer Genauigkeit.

Das erfindungsgemäße Messsystem besitzt eine (besonders für phasen-messende Verfahren notwendige) sehr gute optische Trennung zwischen Sende- und Empfangspfad.

Das erfindungsgemäße Messsystem besitzt geringere Justage-Anforderungen an Sende- und Empfangspfad aufgrund des großflächigen Detektors.

Das erfindungsgemäße Messsystem gibt die Möglichkeit das Signal-Rausch-Verhältnis und damit die Reichweite zu verbessern, dadurch dass ein Detektor-Array mit auswählbaren Pixeln verwendet wird.

Das erfindungsgemäße Messsystem ermöglicht eine deutliche Kostenersparnis dadurch, dass ein SPAD-Detektor-Array verwendet wird.

Eine Ausführungsform der Erfindung beruht auf dem Gedanken, einen großflächigen Detektor für die scannende Entfernungsmessung zu verwenden, bei dem die Art der Anordnung einzelner SPADs in Pixeln, deren Signale kombiniert werden, bevor sie einer zeitlichen Auswerteeinheit (das heißt einer Entfernungsbestimmungseinrichtung/einem Binning-Schema) zur weiteren Auswertung zugeführt werden, vorteilhaft ausgestaltet ist. Die Menge an SPADs, deren Signale mittels eines Kombinierers zusammengefasst werden, bildet dabei ein Pixel.
Die einzelnen Pixel können unabhängig voneinander betrieben werden. Insbesondere kann eine Phasen-Auswertung einer kontinuierlichen Welle oder alternativ eine Flugzeitauswertung eines Pulses für jedes einzelne Pixel ausgeführt werden.

Dadurch lässt sich ein scannendes Entfernungsmesssystem realisieren, dessen Montage und Justiergenauigkeit deutlich reduziert werden können. Insbesondere sind damit auch erstmals handgehaltene scannende Entfernungsmesssysteme realisierbar.

Eine Kombination mehrerer SPADs zu Pixeln kann räumlich derart ausgestaltet werden, dass das Signal-Rausch-Verhältnis sowohl bei großen als auch bei kleinen Entfernungen insbesondere unter starker Hintergrundbeleuchtung mit wenigen Entfernungsbestimmungseinrichtungen optimiert werden kann. Erreicht werden kann dies über eine über die Detektionsfläche ortsabhängige Anpassung der Größe der Pixel bzw. der Anzahl von SPADs, die zu einem Pixel kombiniert werden.

Die speziell auf Erhöhung des Signal-Rausch-Verhältnisses bei einem Laserentfernungsmesser hin optimierte Art der Anordnung von wahlweise Pixeln mit nur einer SPAD oder Pixeln mit unterschiedlicher Größe und Anzahl von SPADs stellt eines der Unterscheidungsmerkmale sowohl zu herkömmlichen Laserentfernungsmessern als auch zu 3D-Kameras dar. Diese Anordnung kann die Anforderungen an eine Justage einer Optik innerhalb der Messvorrichtung senken und kann gleichzeitig zu einem optimierten Signal-Rausch-Verhältnis beitragen, auch wenn die Empfangseinrichtung nicht in der Bildebene der Optik liegt, wie dies zum Beispiel bei Fix-Fokus-Systemen auftreten kann.

Insbesondere lässt sich mit dem beschriebenen Messsystem ein kompaktes, insbesondere handgehaltenes Messgerät zur mehrdimensionalen Vermessung eines Zielobjektes realisieren.

Eine Detektionsfläche kann so groß dimensioniert sein, dass die Anforderungen an die Justage der Empfangsoptik verringert werden können. Außerdem kann der Einfluss optischer Abbildungsfehler, insbesondere der Fehler durch Defokussierung aufgrund zu geringer Schärfentiefe, minimiert werden. Dadurch können die Anforderungen an die optische Qualität der Empfangsoptik verringert werden.

Ein weiterer Vorteil kann die Optimierung des Signal-Rausch-Verhältnisses insbesondere bei großen Messentfernungen unter hohem Hintergrundlicht-Anteil sein. Dies kann dadurch erreicht werden, dass die effektive Detektionsfläche bei allen Entfernungen optimal an die Größe des tatsächlich abgebildeten Lasermessflecks in der Detektionsebene angepasst, das heißt minimiert werden kann. Nach abgeschlossener Messung können gezielt die Signale von ausschließlich denjenigen einzelnen SPADs bzw. Pixeln mit mehreren SPADs ausgewertet werden, die tatsächlich Laserstrahlung empfangen. Dadurch kann die effektive Detektionsfläche reduziert und der Rauschbeitrag des Hintergrundlichtes minimiert werden, was gleichbedeutend mit einer Verbesserung des Signal-Rausch-Verhältnisses sein kann.

Ein weiterer Vorteil kann darin bestehen, dass aufgrund der Zusammenfassung mehrerer SPADs innerhalb eines Pixels weniger Entfernungsbestimmungseinrichtungen als SPADs benötigt werden. Dies kann eine benötigte Chipfläche einer integrierten Schaltung reduzieren. Insbesondere bei Laserentfernungsmessern, die in der Regel mit einer festen Brennweite arbeiten, kann dieser Vorteil eine wichtige Rolle spielen, da der Laserfleckdurchmesser dann in Abhängigkeit von der Entfernung des Zielobjekts variieren kann. Fig. 6 verdeutlicht dies für ein System, bei dem der Parallaxen-Fehler nicht korrigiert ist. Um das Signal-Rausch-Verhältnis wie zuvor beschrieben durch Minimierung der effektiven Detektionsfläche zu optimieren, kann bei größeren Laserfleck-Durchmessern, das heißt in der Regel bei geringeren Entfernungen des Zielobjektes, dementsprechend auch nur eine geringere Auflösung des Detektors benötigt werden.

Dieser Umstand lässt sich durch die ortsabhängige Kombination von SPADs zu Pixeln ausnutzen.

Da die effektive Detektionsfläche, das heißt die Fläche, die in der Auswertung der Messung berücksichtigt wird, in der Regel kleiner ist als die gesamte Detektionsfläche, kann die Anzahl benötigter Entfernungsbestimmungseinrichtungen noch weiter reduziert werden, indem zusätzlich zur Kombination von SPADs auch noch ein Multiplexen angewandt wird. Mit Hilfe vorläufiger Messungen können in diesem Fall die Laserstrahlung empfangenden Pixel zunächst identifiziert und anschließend für die eigentliche Messung auf die Entfernungsbestimmungseinrichtungen verteilt werden. Ist N die Gesamtzahl an Pixeln mit einer oder mehreren SPADs und M die Anzahl der zur Auswertung zur Verfügung stehenden Entfernungsbestimmungseinrichtungen, dann müssen maximal aufgerundet N/M vorläufige Messungen zur Identifizierung durchgeführt werden. Die Messaufgabe kann daher mit wenigen Messungen, im Idealfall mit einer einzigen Messung, durchgeführt werden.

Ein weiterer Vorteil kann darin liegen, dass einzelne Pixel unabhängig voneinander kalibriert werden können, zum Beispiel hinsichtlich eines Phasen-Offsets.

## Patentansprüche

1. Messvorrichtung zur mehrdimensionalen Vermessung eines Zielobjektes, wobei die Messung der Entfernung zu einzelnen Objektpunkten des Zielobjektes sequentiell mittels eines phasenmessenden Systems erfolgt, zumindest aufweisend
eine Sendeeinrichtung (12) zur Aussendung optischer Messstrahlung (13) entlang eines Sendepfades auf das Zielobjekt (15) hin;
eine Empfangseinrichtung (14) mit einer Detektionsfläche (110) zur Detektion von von dem Zielobjekt (15) entlang eines Empfangspfades zurücklaufender optischer Messstrahlung (16);
ein scannendes System, zur Umlenkung der optischen Messstrahlung;
und eine Auswerteeinrichtung (36) zur Bestimmung von Entfernungsmesswerten; **dadurch gekennzeichnet, dass**
der Sendepfad und der Empfangspfad getrennte optische Systeme bilden, wobei das scannende System je eine separate Scannereinheit für Sendepfad und Empfangspfad aufweist,
wobei die Detektionsfläche (110) der Empfangseinrichtung eine Vielzahl von Pixeln (111) aufweist, wobei jedes Pixel (111) mindestens eine SPAD (101) aufweist und wobei jedes der Vielzahl von Pixeln (111) mit der Auswerteeinrichtung (36) verbunden ist.

2. Messvorrichtung nach Anspruch 1, **dadurch gekennzeichnet, dass** das Scanner System zumindest einen Galvano -Scanner aufweist.

3. Messvorrichtung nach Anspruch 1 oder 2, **dadurch gekennzeichnet, dass** das Scanner System je einen Galvano-Scanner für den Sende- und den Empfangspfad der Messvorrichtung aufweist.

4. Messvorrichtung nach Anspruch 1, **dadurch gekennzeichnet,** das die Sendeeinrichtung (12) und die Empfangseinrichtung (14) derart ausgelegt sind, dass von dem Zielobjekt (15) zurücklaufende optische Messstrahlung (16) eine Mehrzahl von Pixeln (111) gleichzeitig beleuchtet.

5. Messvorrichtung nach Anspruch 1 oder 2, **dadurch gekennzeichnet,** die Auswerteeinrichtung (36) dazu ausgelegt ist, eine Entfernung (48) zwischen der Messvorrichtung (10) und dem Zielobjekt (15) basierend auf einer Auswertung von Detektionssignalen mehrerer Pixel (111) zu ermitteln.

6. Messvorrichtung nach einem der vorhergehenden Ansprüche, **wobei** die Auswerteeinrichtung (36) wenigstens eine Entfernungsbestimmungseinrichtung (130) aufweist, die dazu ausgelegt ist, eine Flugdauer von Messstrahlung (13, 16) zwischen einer Aussendung von der Sendeeinrichtung (12) bis zu einer Detektion von von dem Zielobjekt (15) zurücklaufender Messstrahlung (16) zu ermitteln und daraus eine Entfernung zu bestimmen.

7. Messvorrichtung nach einem der vorhergehenden Ansprüche, **wobei** eine Mehrzahl von Pixeln (111) mit einer Entfernungsbestimmungseinrichtung (130) verbunden ist und die Entfernungsbestimmungseinrichtung (130) dazu ausgelegt ist, die Entfernung basierend auf Detektionssignalen der Mehrzahl von Pixeln (111) zu bestimmen.

8. Messvorrichtung nach Anspruch 1, **wobei** die Auswerteeinrichtung (36) eine Mehrzahl von Entfernungsbestimmungseinrichtungen (130) aufweist und die Auswerteeinrichtung (36) dazu ausgelegt ist, die Entfernung (48) zwischen der Messvorrichtung (10) und dem Zielobjekt (15) basierend auf den von den Entfernungsbestimmungseinrichtungen (130) bestimmten Entfernungen zu bestimmen.

9. Messvorrichtung nach einem der Ansprüche 1 bis 8, **wobei** wenigstens einige Pixel (111) jeweils eine Mehrzahl von SPADs (101) enthalten.

10. Messvorrichtung nach Anspruch 9, **ferner aufweisend** wenigstens einen Kombinierer (160), der dazu ausgelegt ist, Detektionssignale von SPADs (101), die in einem einzelnen Pixel (111) enthalten sind, zu kombinieren.

11. Messvorrichtung nach Anspruch 9 oder 10, **ferner aufweisend** wenigstens einen Pulsverkürzer, um ein von einer SPAD generiertes digitales Signal zeitlich zu verkürzen.

12. Messvorrichtung nach Anspruch 9, 10 oder 11, **wobei** die Anzahl von SPADs (101), die in einem Pixel (111) enthalten sind, abhängig vom Ort des Pixels (111) innerhalb der Detektionsfläche (110) der Empfangseinrichtung (14) variiert.

13. Messvorrichtung nach einem der Ansprüche 9 bis 12, **wobei** eine Fläche von SPADs, die in einem Pixel (111) enthalten sind, abhängig vom Ort des Pixels (111) innerhalb der Detektionsfläche (110) der Empfangseinrichtung (14) variiert.

14. Messvorrichtung nach Anspruch 12 oder 13, **wobei** die Anzahl von SPADs (101), die in einem Pixel (111) enthalten sind, in Pixeln (111) nahe der Sendeeinrichtung (12) kleiner ist als in Pixeln (111) entfernt von der Sendeeinrichtung (12).

15. Messvorrichtung nach einem der Ansprüche 12 bis 14, **wobei** die Anzahl von SPADs (101), die in einem Pixel (111) enthalten sind, in Pixeln (111) nahe dem Zentrum (122) der Detektionsfläche (110) kleiner ist als in Pixeln (111) entfernt von dem Zentrum (122) der Detektionsfläche (110).

16. Messvorrichtung nach einem der Ansprüche 1 bis 15, **wobei** die Sendeeinrichtung (12) und die Empfangseinrichtung (14) derart ausgelegt sind, dass eine Anzahl von Pixeln (111), die durch von dem Zielobjekt (15) zurücklaufende optische Messstrahlung (16) gleichzeitig beleuchtet werden, in Abhängigkeit von einem Abstand (48) zwischen dem Zielobjekt (15) und der Messvorrichtung (10) variiert.

17. Messvorrichtung nach einem der Ansprüche 1 bis 16, **wobei** die Empfangseinrichtung (14) und die Auswerteeinrichtung (36) dazu ausgelegt sind, dass Detektionssignale einzelner Pixel (111) unabhängig von Detektionssignalen anderer Pixel (111) von der Auswerteeinrichtung (36) ausgewertet werden können.

18. Messvorrichtung nach einem der Ansprüche 1 bis 17, **wobei** die Empfangseinrichtung (14) und die Auswerteeinrichtung (36) dazu ausgelegt sind, eine Entfernung (48) zwischen der Messvorrichtung (10) und dem Zielobjekt (15) basierend auf einer Auswertung von Detektionssignalen ausschließlich von Pixeln (111) innerhalb einer effektiven Detektionsfläche (170), auf die Licht der von der Sendeeinrichtung beleuchten Fläche des Zielobjektes zurückgestrahlt wird, zu ermitteln.

19. Messvorrichtung nach einem der Ansprüche 1 bis 18, **ferner aufweisend** wenigstens einen Multiplexer (140), der dazu ausgelegt ist, Detektionssignale mehrerer Pixel (111) selektiv an die Auswerteeinrichtung (36) weiterzuleiten.

## Claims

1. Measuring device for multi-dimensional measuring of a target object, wherein the measurement of the distance to individual object points of the target object is carried out in sequence by means of a phase-measuring system, comprising at least:
a transmission apparatus (12) for emitting optical measurement radiation (13) along a transmission path toward the target object (15);
a reception apparatus (14) with a detection area (110) for detecting optical measurement radiation (16) returning along a reception path from the target object (15) ;
a scanning system for deflecting the optical measurement radiation;
and an evaluation apparatus (36) for determining distance measurement values;
**characterized in that**
the transmission path and the reception path form separate optical systems, wherein the scanning system has one separate scanner unit in each case for the transmission path and the reception path,
wherein the detection area (110) of the reception apparatus has a multiplicity of pixels (111), wherein each pixel (111) has at least one SPAD (101) and wherein every one of the multiplicity of pixels (111) is connected to the evaluation apparatus (36).

2. The measuring device as claimed in Claim 1, **characterized in that** the scanning system has at least one galvano scanner.

3. The measuring device as claimed in Claim 1 or 2, **characterized in that** the scanning system has one galvano scanner in each case for the transmission path and the reception path of the measuring device.

4. The measuring device as claimed in Claim 1, **characterized in that** the transmission apparatus (12) and the reception apparatus (14) are designed in such a way that optical measurement radiation (16) returning from the target object (15) illuminates a plurality of pixels (111) at the same time.

5. The measuring device as claimed in Claim 1 or 2, **characterized** the evaluation apparatus (36) is designed to establish a distance (48) between the measuring device (10) and the target object (15) on the basis of an evaluation of detection signals from a plurality of pixels (111).

6. The measuring device as claimed in one of the preceding claims, **wherein** the evaluation apparatus (36) has at least one distance determination apparatus (130) which is designed to establish a flight time of measurement radiation (13, 16) between an emission by the transmission apparatus (12) and a detection of measurement radiation (16) returning from the target object (15) and determine a distance therefrom.

7. The measuring device as claimed in one of the preceding claims, **wherein** a plurality of pixels (111) are connected to a distance determination apparatus (130) and the distance determination apparatus (130) is designed to determine the distance on the basis of detection signals from the plurality of pixels (111).

8. The measuring device as claimed in Claim 1, **wherein** the evaluation apparatus (36) has a plurality of distance determination apparatuses (130) and the evaluation apparatus (36) is designed to determine the distance (48) between the measuring device (10) and the target object (15) on the basis of the distances determined by the distance determination apparatuses (130) .

9. The measuring device as claimed in one of Claims 1 to 8, **wherein** at least some pixels (111) each contain a plurality of SPADs (101).

10. The measuring device as claimed in Claim 9, **furthermore comprising** at least one combiner (160) which is designed to combine detection signals from SPADs (101) which are contained in a single pixel (111).

11. The measuring device as claimed in Claim 9 or 10, **furthermore comprising** at least one pulse shortener in order to shorten a digital signal generated by a SPAD in time.

12. The measuring device as claimed in Claim 9, 10 or 11, **wherein** the number of SPADs (101) contained in a pixel (111) varies dependent on the location of the pixel (111) within the detection area (110) of the reception apparatus (14).

13. The measuring device as claimed in one of Claims 9 to 12, **wherein** an area of SPADs contained in a pixel (111) varies dependent on the location of the pixel (111) within the detection area (110) of the reception apparatus (14).

14. The measuring device as claimed in Claim 12 or 13, **wherein** the number of SPADs (101) contained in a pixel (111) is smaller in pixels (111) close to the transmission apparatus (12) than in pixels (111) remote from the transmission apparatus (12).

15. The measuring device as claimed in one of Claims 12 to 14, **wherein** the number of SPADs (101) contained in a pixel (111) is smaller in pixels (111) close to the center (122) of the detection area (110) than in pixels (111) remote from the center (122) of the detection area (110).

16. The measuring device as claimed in one of Claims 1 to 15, **wherein** the transmission apparatus (12) and the reception apparatus (14) are designed in such a way that a number of pixels (111) which are illuminated simultaneously by optical measurement radiation (16) returning from the target object (15) varies dependent on a distance (48) between the target object (15) and the measuring device (10).

17. The measuring device as claimed in one of Claims 1 to 16, **wherein** the reception apparatus (14) and the evaluation apparatus (36) are designed to allow detection signals from individual pixels (111) to be evaluated by the evaluation apparatus (36), independently of detection signals from other pixels (111).

18. The measuring device as claimed in one of Claims 1 to 17, **wherein** the reception apparatus (14) and the evaluation apparatus (36) are designed to establish a distance (48) between the measuring device (10) and the target object (15) on the basis of an evaluation of detection signals only from pixels (111) within an effective detection area (170) onto which light from the area of the target object illuminated by the transmission apparatus is radiated back.

19. The measuring device as claimed in one of Claims 1 to 18, **further comprising** at least one multiplexer (140) which is designed to transmit detection signals from a plurality of pixels (111) to the evaluation apparatus (36) in a selective manner.

## Revendications

1. Dispositif de mesure destiné au mesurage multidimensionnel d'un objet cible, la mesure de la distance par rapport à des points d'objet individuels de l'objet cible étant effectuée séquentiellement au moyen d'un système de mesure de phase, possédant au moins
un appareil d'émission (12) destiné à émettre un rayonnement de mesure optique (13) le long d'un trajet d'émission en direction de l'objet cible (15) ;
un appareil de réception (14) pourvu d'une surface de détection (110) servant à la détection d'un rayonnement de mesure optique (16) en retour depuis l'objet cible (15) le long d'un trajet de réception ;
un système de balayage destiné à dévier le rayonnement de mesure optique ;
et un appareil d'interprétation (36) destiné à définir des valeurs mesurées de la distance ;
**caractérisé en ce que**
le trajet d'émission et le trajet de réception forment des systèmes optiques séparés,
le système de balayage possède une unité de balayage respectivement distincte pour le trajet d'émission et le trajet de réception,
la surface de détection (110) de l'appareil de réception possède une pluralité de pixels (111), chaque pixel (111) possédant au moins une SPAD (101) et chacun de la pluralité de pixels (111) étant relié à l'appareil d'interprétation (36).

2. Dispositif de mesure selon la revendication 1, **caractérisé en ce que** le système de balayage possède au moins un dispositif de balayage à galvanomètre.

3. Dispositif de mesure selon la revendication 1 ou 2, **caractérisé en ce que** le système de balayage possède respectivement un dispositif de balayage à galvanomètre pour le trajet d'émission et le trajet de réception du dispositif de mesure.

4. Dispositif de mesure selon la revendication 1, **caractérisé en ce que** l'appareil d'émission (12) et l'appareil de réception (14) sont conçus de telle sorte que le rayonnement de mesure optique (16) en retour depuis l'objet cible (15) éclaire simultanément une pluralité de pixels (111).

5. Dispositif de mesure selon la revendication 1 ou 2, caractérisé en ce l'appareil d'interprétation (36) est conçu pour déterminer une distance (48) entre le dispositif de mesure (10) et l'objet cible (15) en se basant sur une interprétation de signaux de détection de plusieurs pixels (111).

6. Dispositif de mesure selon l'une des revendications précédentes, l'appareil d'interprétation (36) possédant au moins un appareil de définition de distance (130) qui est conçu pour déterminer un temps de vol du rayonnement de mesure (13, 16) entre une émission par l'appareil d'émission (12) et une détection du rayonnement de mesure (16) en retour depuis l'objet cible (15) et, partir de celui-ci, définir une distance.

7. Dispositif de mesure selon l'une des revendications précédentes, la pluralité de pixels (111) étant reliés à un appareil de définition de distance (130) et l'appareil de définition de distance (130) étant conçu pour définir la distance en se basant sur des signaux de détection de la pluralité de pixels (111).

8. Dispositif de mesure selon la revendication 1, l'appareil d'interprétation (36) possédant une pluralité d'appareils de définition de distance (130) et l'appareil d'interprétation (36) étant conçu pour définir la distance (48) entre le dispositif de mesure (10) et l'objet cible (15) en se basant sur les distances définies par les appareils de définition de distance (130).

9. Dispositif de mesure selon l'une des revendications 1 à 8, au moins certains pixels (111) contenant respectivement une pluralité de SPAD (101).

10. Dispositif de mesure selon la revendication 9, possédant en outre au moins un combineur (160) qui est conçu pour combiner les signaux de détection des SPAD (101) qui sont contenues dans un pixel (111) individuel.

11. Dispositif de mesure selon la revendication 9 ou 10, possédant en outre au moins un raccourcisseur d'impulsion afin de raccourcir dans le temps un signal numérique généré par une SPAD.

12. Dispositif de mesure selon la revendication 9, 10 ou 11, le nombre de SPAD (101) qui sont contenues dans un pixel (111) variant en fonction de l'emplacement du pixel (111) à l'intérieur de la surface de détection (110) de l'appareil de réception (14) .

13. Dispositif de mesure selon l'une des revendications 9 à 12, une surface des SPAD qui sont contenues dans un pixel (111) variant en fonction de l'emplacement du pixel (111) à l'intérieur de la surface de détection (110) de l'appareil de réception (14) .

14. Dispositif de mesure selon la revendication 12 ou 13, le nombre de SPAD (101) qui sont contenues dans un pixel (111) étant plus petit dans les pixels (111) à proximité de l'appareil d'émission (12) que dans les pixels (111) éloignés de l'appareil d'émission (12).

15. Dispositif de mesure selon l'une des revendications 12 à 14, le nombre de SPAD (101) qui sont contenues dans un pixel (111) étant plus petit dans les pixels (111) à proximité du centre (122) de la surface de détection (110) que dans les pixels (111) éloignés du centre (122) de la surface de détection (110).

16. Dispositif de mesure selon l'une des revendications 1 à 15, l'appareil d'émission (12) et l'appareil de réception (14) étant conçus de telle sorte qu'un nombre de pixels (111) qui sont éclairés simultanément par le rayonnement de mesure optique (16) en retour depuis l'objet cible (15) varie en fonction d'un écart (48) entre l'objet cible (15) et le dispositif de mesure (10).

17. Dispositif de mesure selon l'une des revendications 1 à 16, l'appareil de réception (14) et l'appareil d'interprétation (36) étant conçus de telle sorte que des signaux de détection de pixels (111) individuels peuvent être interprétés par l'appareil d'interprétation (36) indépendamment des signaux de détection des autres pixels (111).

18. Dispositif de mesure selon l'une des revendications 1 à 17, l'appareil de réception (14) et l'appareil d'interprétation (36) étant conçus pour déterminer une distance (48) entre le dispositif de mesure (10) et l'objet cible (15) en se basant sur une interprétation de signaux de détection exclusivement de pixels (111) à l'intérieur d'une surface de détection (170) effective sur laquelle est renvoyée la lumière de la surface de l'objet cible qui est éclairée par l'appareil d'émission.

19. Dispositif de mesure selon l'une des revendications 1 à 18, possédant en outre au moins un multiplexeur (140) qui est conçu pour retransmettre de manière sélective à l'appareil d'interprétation (36) les signaux de détection de plusieurs pixels (111).
